# EUROPÄISCHE PATENTSCHRIFT

(11) **EP 1 229 271 B1**
(45) Veröffentlichungstag und Bekanntmachung des Hinweises auf die Patenterteilung: **17.10.2007**
(21) Anmeldenummer: 02000376.0
(22) Anmeldetag: 05.01.2002
(51) Int. Cl.: F16H 59/02, B60K 20/02

(54) **Handschalthebel**
Gear shift lever
Levier de changement de vitesse

(30) Priorität: 03.02.2001 DE 10104960
(43) Veröffentlichungstag der Anmeldung: 07.08.2002
(73) Patentinhaber: Dura Automotive Systems Einbeck GmbH, 37574 Einbeck (DE)
(72) Erfinder: Freter, Heiko, 37574 Einbeck (DE)
(74) Vertreter: Sobisch, Peter

(56) Entgegenhaltungen:
- EP-A- 1 143 321
- PATENT ABSTRACTS OF JAPAN Bd. 0072, Nr. 10 (P-223), 16. September 1983 (1983-09-16) & JP 58 105316 A (KOJIMA PRESS KOGYO KK), 23. Juni 1983 (1983-06-23)

## Beschreibung

Die Erfindung bezieht sich auf einen Handschalthebel entsprechend dem Oberbegriff des Anspruchs 1.

Handschalthebel für Kraftfahrzeugwechselgetriebe bestehen regelmäßig aus einem stabförmigen, an seinem einen Ende in einem Schalthebelgehäuse gelagerten Grundkörper, dessen anderes Ende einen Schaltknauf trägt. Der Grundkörper steht innerhalb des Schalthebelgehäuses regelmäßig über ein Schaltgestänge, welches zur Übertragung von Schalt- und Wählbewegungen eingerichtet ist, mit dem jeweiligen Getriebe in Wirkverbindung. Nach Maßgabe der absoluten Länge des Grundkörpers befindet sich der Schaltknauf in einer festgelegten Position zu dem jeweiligen Fahrer, wobei diese Position von Eigenschaften der Person des Fahrers, dessen Gewohnheiten dem subjektiv gewünschten Schaltverhalten, jedoch auch objektiven anatomischen Gegebenheiten mehr oder weniger entgegenkommt.

Aus Patent Abstracts of Japan Bd. 0072, Nr. 10 (P-223), 16. September 1983 und JP 58 105316 A (KOJIMA PRESS KOGYO KK), 23. Juni 1983, die die Merkmale des Oberbegriffs des Anspruch 1 zeigt, ist ein Handschalthebel bekannt, bei welchem an dem einen Ende eines langgestreckten Grundkörpers ein Schaltknauf angeordnet ist, dessen anderes Ende in einem Rohrelement unter Mitwirkung einer Klemmmutter axial fixierbar ist, welches Rohrelement an seinem, dem Schaltknauf abgekehrten Ende in einem Schalthebelgehäuse gelagert ist. Durch Betätigung der Klemmmutter, somit einem Schraubvorgang ist der Befestigungszustand des Grundkörpers innerhalb des Rohrelementes lösbar und in beliebigen Zwischenpositionen erneut fixierbar, so dass auf diesem Wege die Wirklänge des Handschalthebels einstellbar ist.

Es ist vor diesem Hintergrund die Aufgabe der Erfindung, einen Handschalthebel der eingangs bezeichneten Gattung mit der Maßgabe auszugestalten, dass der Komfort für den Fahrer eines Kraftfahrzeugs erhöht wird und insbesondere eine vereinfachte Anpassung an individuelle Eigenschaften und Wünsche des Fahrers möglich ist. Gelöst ist diese Aufgabe bei einem solchen Handschalthebel durch die Merkmale des Kennzeichnungsteils des Anspruchs 1.

Der Schaltknauf ist in Längsrichtung des stab- bzw. rohrförmigen Grundkörpers des Handschalthebels verschiebbar und in der jeweiligen Verschiebeposition fixierbar. Dies bedeutet, dass die absolute Länge des in den Fahrgastraum des Fahrzeugs hineinragenden Handschalthebels variierbar ist, so dass der Abstand des Schaltknaufs von einem Lagerungspunkt des Schalthebels in dem Schalthebellagergehäuse eine veränderbare Länge aufweist. Demzufolge verändern sich auch die Handhabungseigenschaften des Schalthebels, dessen Schaltverhalten und die Schaltposition des Fahrers, der somit die Möglichkeit erhält, den Handschalthebel hinsichtlich seiner Länge seinen individuellen Wünschen anzupassen und somit den Fahrkomfort zu verbessern. Eine Montagehülse bildet erfindungsgemäß das Verbindungsglied zwischen dem Schaltknauf einerseits und dem Grundkörper des Handschalthebels andererseits. Der Schaltknauf als solcher besteht regelmäßig aus einem Elastomerwerkstoff oder einem vergleichbaren Kunststoff und steht formschlüssig mit der Montagehülse in Verbindung. Dies kann beispielsweise durch einen Schäum- oder Spritzprozess herbeigeführt werden. Die Montagehülse ist somit gegenüber dem Grundkörper verschiebbar angeordnet, um die eingangs genannte Justierung des Schaltknaufs zu bewirken. Die Montagehülse als solche kann aus Metall, jedoch auch aus einem Kunststoff bestehen.

Die Merkmale der Ansprüche 2 und 3 sind auf unterschiedliche Arten der Einstellung des Schaltknaufs gerichtet. Der Schaltknauf kann hiernach in diskreten Einzelpositionen eines konstruktiv vorgegebenen maximalen Verschiebeweges fixierbar sein - in Betracht kommt jedoch auch eine Fixierung an beliebigen Punkten des Verschiebeweges. Die Fixierung des Schaltknaufs kann nach Maßgabe form- oder reibschlüssiger Funktionsprinzipien angelegt sein.

Eine Sperrhülse bildet entsprechend den Merkmalen des Anspruchs 4 beispielhaft ein Schaltglied, welches zum Zusammenwirken mit der Montagehülse bestimmt ist und diese nach Art einer Schaltmuffe umgibt, die relativ zu der Montagehülse axial verschiebbar ist. Diese Verschiebbarkeit der Sperrhülse ist zumindest zwischen einer ersten Position, in der die Montagehülse relativ zu dem genannten Grundkörper fixiert ist und einer zweiten Position gegeben, in der der Fixierungszustand der Montagehülse gelöst ist, so dass eine freie Verschiebbarkeit auf den Grundkörper bereitgestellt ist. Dies bedeutet, dass die Montagehülse und/oder die Sperrhülse mit Funktionselementen versehen sind, die unmittelbar der Fixierung der Montagehülse auf dem Grundkörper dienen, wobei das Prinzip dieser Funktionselemente reib- oder formschlüssig angelegt sein kann. Wesentlich ist ferner, dass die Sperrhülse elastisch, z.B. durch Federkraft in ihrer erstgenannten Position fixiert ist, in der die Montagehülse auf dem Grundkörper festgelegt ist. Die Lösung dieses Fixierungszustands erfolgt somit entgegen der Wirkung einer elastischen Rückstellkraft.

Gemäß den Merkmalen der Ansprüche 5 und 6 sind an der Montagehülse Verriegelungszungen vorgesehen, welche als formschlüssig wirksame Funktionselemente zur Herbeiführung des Fixierungszustands der Montagehülse und damit des Schaltknaufs auf dem Grundkörper angelegt sind. Es ist wenigstens eine, radial bezüglich der Längsachse des Grundkörpers auslenkbare, an ihrem freien Ende mit einem Verriegelungshaken versehene Verriegelungszunge vorgesehen - zweckmäßigerweise sind jedoch mehrere Verriegelungszungen nach Maßgabe einer gleichförmigen Umfangsverteilung vorgesehen und voneinander durch Spalte beabstandet. Diese Anordnung der Verriegelungszungen erstreckt sich axial bezüglich der Montagehülse und umgibt somit den Grundkörper. Die Verriegelungszungen sind elastisch in radialer Richtung bezüglich der Achse des Grundkörpers auslenkbar und werden durch die Sperrhülse in ihrer Eingriffsposition mit der jeweiligen Rastnut formschlüssig gehalten. Dies bedeutet, dass die Sperrhülse mit einem Betätigungsabschnitt, beispielsweise einer Bohrung versehen ist, durch welche diese Eingriffsposition der Verriegelungszungen herbeigeführt wird und zugleich formschlüssig gesichert ist. Die Verriegelungszungen befinden sich in diesem Eingriffszustand unter elastischer Vorspannung, d.h. sie nehmen im entspannten Zustand eine Position außerhalb der Rastnut ein. Dies bedeutet, dass mittels einer Verschiebung der Sperrhülse, so dass über deren genannte Bohrung keine Führungswirkung mehr auf die Verriegelungszungen ausgeübt wird, diese infolge eines elastischen Zurückfederns den Verriegelungszustand aufheben und demzufolge eine freie Verschiebbarkeit der Montagehülse entlang des Grundkörpers gegeben ist.

Entsprechend den Merkmalen des Anspruchs 7 ist eine Sperrfeder vorgesehen, über welche die Sperrhülse elastisch in der genannten ersten, eine Fixierung der Montagehülse auf dem Grundkörper bewirkenden Position fixiert ist. Der Verschiebeweg der Sperrhülse auf der Montagehülse kann beispielsweise konstruktiv durch Strukturelemente der Montagehülse beiderseitig axial begrenzt sein, wobei die Sperrfeder an ihrem einen Ende an einem dieser Strukturelemente und an ihrem anderen Ende unmittelbar an der Sperrhülse abgestützt ist. Die Verschiebung der Sperrhülse erfolgt somit entgegen der Rückstellkraft dieser Sperrfeder, um den Fixierungszustand zu lösen, um eine Verstellung des Schaltknaufs zu ermöglichen.

Zur Verbesserung des Bedienkomforts ist die Sperrhülse entsprechend den Merkmalen des Anspruchs 8 mit einem Betätigungsabschnitt versehen, der das manuelle Erfassen und Verschieben derselben entlang des Grundkörpers ermöglichen, insbesondere vereinfachen soll. Dieser Betätigungsabschnitt kann beispielsweise außenseitig eine Profilierung aufweisen oder gestaltlich in sonstiger Weise mit der Maßgabe angelegt sein, dass ein einfaches und zuverlässiges Erfassen ermöglicht wird.

Der Grundkörper ist ferner entsprechend den Merkmalen des Anspruchs 9 unverdrehbar innerhalb der Montagehülse angeordnet, so dass eine eindeutige Drehwinkelposition des Schaltknaufs hinsichtlich der Längsachse des Grundkörpers gegeben ist, und zwar auch dann, wenn dieser erfindungsgemäß verstellt wird.

Die Merkmale der Ansprüche 10 bis 12 sind auf weitere konstruktive Konkretisierungen gerichtet, die die Befestigung der Montagehülse an dem Grundkörper betreffen. Mittels eines, mit Abstand von dem, dem Schaltknauf zugekehrten Ende des Grundkörpers in diesem angeordneten, von einem Sicherungsbolzen durchdrungenen Schlitz wird auf konstruktivem Wege der maximal mögliche Verschiebeweg des Schaltknaufs auf dem Grundkörper festgelegt, eine Verdrehsicherung des Schaltknaufs gebildet, und zugleich eine unverlierbare Verbindung zwischen dem Schaltknauf und dem Grundkörper bereitgestellt.

Der Erfindungsgegenstand ist hauptsächlich zur Verwendung bei solchen Handschalthebeln bzw. Schaltkonzepten bestimmt, bei denen der Rückwärtsgang nicht durch vorherige Betätigung seiner Schaltmuffe eingelegt wird, da eine solche Schaltmuffe neben der erfindungsgemäß vorgesehenen Sperrhülse zu Bedienfehlern führen könnte. Soweit Bedienfehler ausgeschlossen werden können, kann das erfindungsgemäße Konzept jedoch auch bei solchen, mit Schaltmuffen zur Einlegung des Rückwärtsgangs angelegten Handschalthebeln benutzt werden.

Die Erfindung wird im Folgenden unter Bezugnahme auf das in den Zeichnungen schematisch wiedergegebene Ausführungsbeispiel näher erläutert werden. Es zeigen:

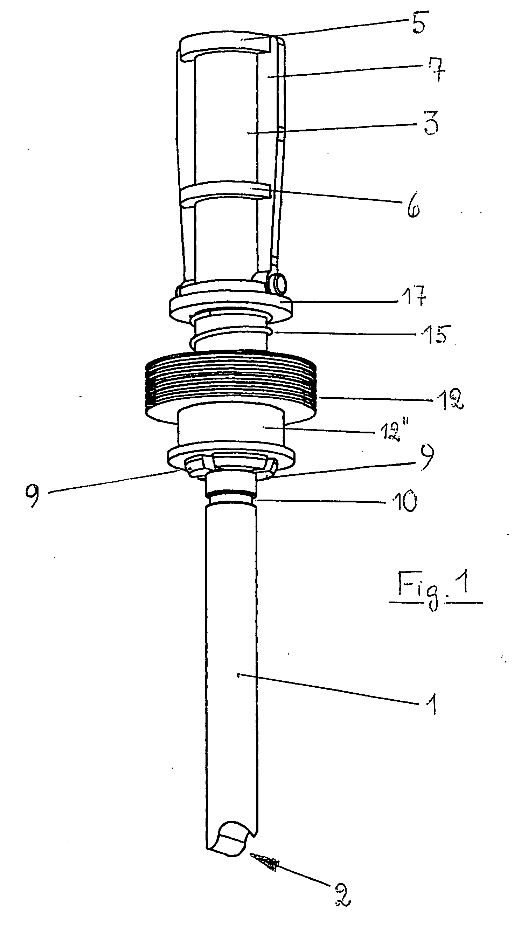

Fig. 1 eine Teilansicht eines erfindungsgemäßen Handschalthebels in perspektivischer Darstellung;

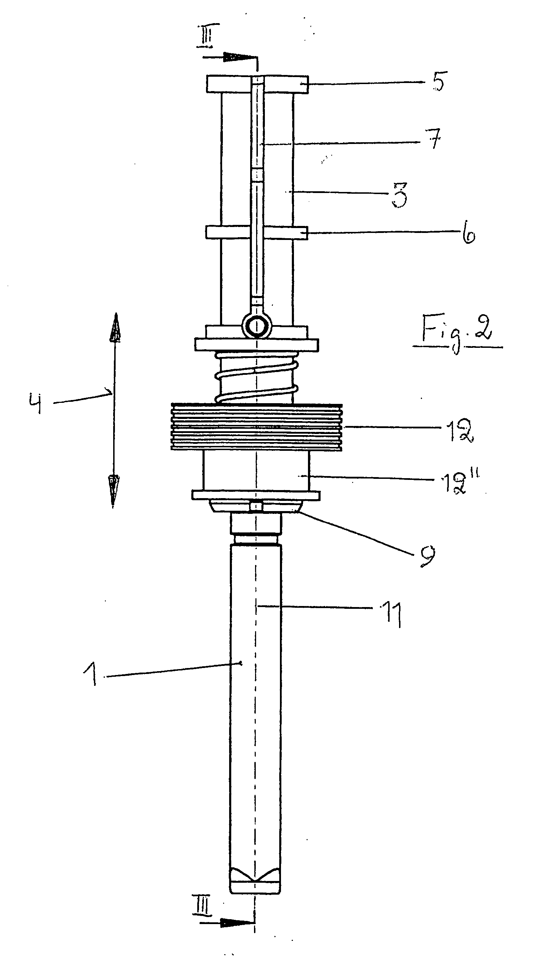

Fig. 2 eine Seitenansicht des oberen Abschnitts eines erfindungsgemäßen Handschalthebels;

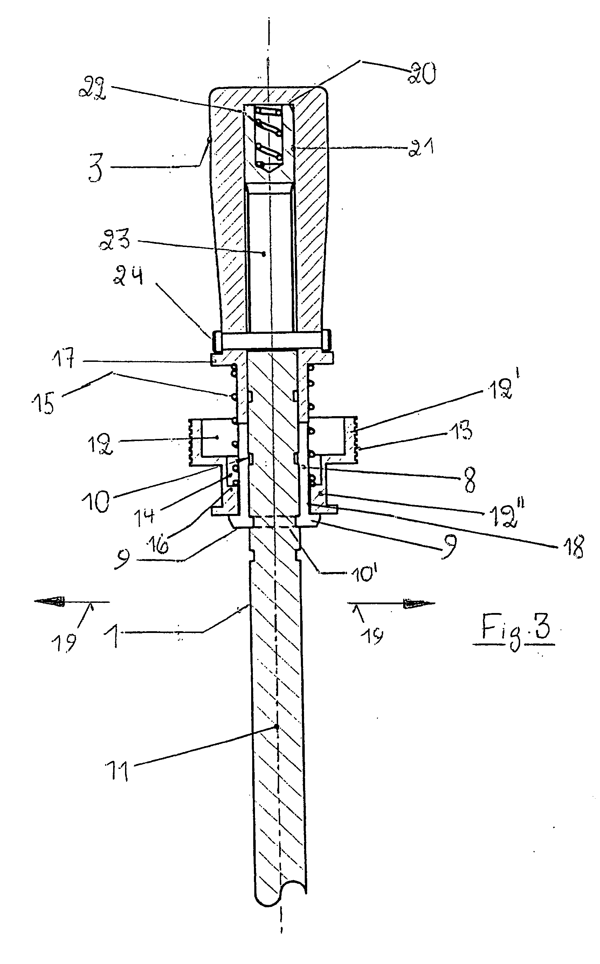

Fig. 3 eine Schnittdarstellung des Handschalthebels gemäß einer Ebene III-III der Fig. 2.

Mit 1 ist in den Figuren der rohr- oder stabförmige Grundkörper eines Handschalthebels für ein Kraftfahrzeuggetriebe bezeichnet, dessen unteres Ende 2 in an sich bekannter, zeichnerisch nicht wiedergegebener Weise in einem Schalthebelgehäuse gelagert ist und mit einem Schaltgestänge in Verbindung steht. Es kann sich hierbei um ein konventionelles schaltbares Wechselgetriebe oder auch um ein Automatikgetriebe handeln.

Das obere Ende des Grundkörpers 1 ist in einer Montagehülse 3 aufgenommen und innerhalb dieser in einer im Folgenden noch näher zu erläuternden Weise in Richtung der Pfeile 4 verschieb- und in diskreten Verschiebepositionen verrastbar aufgenommen.

Die Montagehülse 3 ist ihrerseits zur Einbindung in einer beispielsweise aus einem Elastomerwerkstoff bestehenden, zeichnerisch nicht wiedergegebenen Schaltknauf bestimmt und innerhalb diesem formschlüssig fixiert. Hierzu sind zwei axial mit Abstand voneinander angeordnete Ringflansche 5, 6 und zwei, einander diametral gegenüberliegende, sich axial erstreckende Stege 7 vorgesehen, die in die Substanz des Schaltknaufs hineinragen und diesen an der Montagehülse 3 relativ zu deren Achse unverdrehbar und in Richtung deren Achse unverschiebbar festlegen.

Die Montagehülse 3 ist an ihrem, dem Grundkörper 1 zugekehrten Ende mit einer Anordnung von in Umfangsrichtung gleichförmig verteilten, untereinander gleich bemessenen und durch sich axial erstreckende Schlitze voneinander getrennten Verriegelungszungen 8 versehen, die in hammerkopfartigen Verriegelungshaken 9 enden. Diese Verriegelungshaken 9 sind in einer im Folgenden noch zu beschreibenden Weise zum Zusammenwirken mit ringförmigen Rastnuten 10 des Grundkörpers 1 versehen, die nach Maßgabe gleicher oder ungleichförmiger Abstände entlang der Achse 11 des Grundkörpers 1 in dessen Außenseite eingeformt sind.

Die, den Grundkörper 1 somit umgreifenden Verriegelungszungen 8 befinden sich innerhalb einer, sich koaxial zu der Achse 11 erstreckenden Sperrhülse 12. Diese besteht im Wesentlichen aus zwei, axial aufeinander folgenden zylindrischen Abschnitten, nämlich einem oberen, zur Oberseite hin offenen Abschnitt 12', der außenseitig eine Profilierung 13 aufweist, deren Zweck darin besteht, das manuelle Erfassen der Sperrhülse 12 und deren Verschiebung entlang der Achse 11 zu erleichtern und einem unteren, sich an den Abschnitt 12' anschließenden, in seinen radialen Abmessungen kleineren Abschnitt 12", der eine oberseitig offene Ringkammer 14 begrenzt, die zwischen der Außenseite der Verriegelungszungen 8 und der Innenseite des Abschnitts 12" eingerichtet ist. In dieser Ringkammer 14, somit koaxial zu der Achse 11 erstreckt sich eine Sperrfeder 15, die stirnseitig an ihrem einen Ende auf der ringförmigen Grundfläche 16 der Ringkammer 14 und an ihrem anderen Ende an einem Ringflansch 17 abgestützt ist, der an der Montagehülse 3 angeformt ist.

Das unterseitige Ende des Abschnitts 12" ist somit unter Federkraft in Anlage an solchen Abschnitten der Verriegelungshaken 9 gehalten, die dem, im Eingriff mit den Rastnuten 10 bestimmten Ende gegenüberliegen.

In dem, in der Zeichnungsfig. 2 gezeigten Zustand werden die Verriegelungshaken 9 durch die Sperrhülse 12 im Eingriff mit der gezeigten Rastnut 10' gehalten, welches durch entsprechende Bemessung der Bohrung 18 des Abschnitts 12" der Sperrhülse 12 erreicht wird. Die Verriegelungszungen 8 werden somit in der gezeigten Position der Sperrhülse 12 an einem bezüglich der Achse 11 radial auswärts gerichteten Ausweichen in Richtung der Pfeile 19 formschlüssig gehindert. In der gezeigten Stellung stehen die Verriegelungszungen 8 ferner unter elastischer Vorspannung und es sind diese derart angelegt, dass sie ohne die Sperrwirkung der Bohrung 18 in Richtung der Pfeile 19 bis zum Erreichen eines spannungsfreien Zustands zumindest soweit ausgelenkt werden, dass der Eingriff mit der Rastnut 10' aufgehoben ist.

In den Zeichnungsfiguren ist der Handschalthebel in einem solchen Zustand gezeigt, bei welchem die Montagehülse 3 und damit ein Schaltknauf sich in seiner untersten Position befindet, so dass der Handschalthebel seine geringste Längenerstreckung im Fahrgastraum des jeweiligen Fahrzeugs hat. Dieser Zustand ist dadurch gekennzeichnet, dass das obere Ende 20 des Grundkörpers am Boden der Aufnahmebohrung 21 der Montagehülse 3 anliegt. Mittels einer Feder 22, die in eine stirnseitige Bohrung des Grundkörpers 1 eingesetzt ist und die ebenfalls an dem genannten Boden anliegt, kann eine spielfreie Befestigung der Montagehülse 3 an dem Grundkörper 1 erreicht werden. Der Grundkörper 1 ist darüber hinaus mit einem durchgängigen Schlitz 23 versehen, über welchen in Verbindung mit einem Sicherungsbolzen 24, der in zueinander fluchtende Bohrungen der Montagehülse eingesetzt ist und den Schlitz 23 durchdringt, innerhalb der Aufnahmebohrung 21 der Montagehülse 3 eine verdrehsichere Führung der Montagehülse 3 auf dem Grundkörper 1 gegeben ist. Aus dem Zusammenwirken der bodenseitigen Abstützung des Grundkörpers 1 in der Aufnahmebohrung 21 und dem formschlüssigen Eingriff der Verriegelungszungen 8 in einer Rastnut 10' ergibt sich die axiale Fixierung des Schaltknaufs bzw. der Montagehülse 3 an dem Grundkörper 1.

Eine andere Position der Montagehülse 3 ist nunmehr dadurch erreichbar, dass manuell die Sperrhülse 12 zunächst in Richtung auf die Montagehülse 3 hin verschoben wird, und zwar unter Kompression der Sperrfeder 15, so dass sich der Eingriff der Verriegelungshaken 9 mit der Rastnut 10' löst und in der Folge die Montagehülse 3 entlang des Grundkörpers 1 in Richtung einer sich vergrößernden Schalthebellänge verschiebbar ist. Nach Erreichen der jeweiligen Verschiebeposition wird eine erneute Verrastung der Verriegelungshaken 9 mit der, dieser Position entsprechenden Rastnut 10 herbeigeführt, so dass die neue Position der Montagehülse 3 bzw. des Schaltknaufs wiederum formschlüssig gesichert ist.

Man erkennt aus obigen Ausführungen, dass der erfindungsgemäße Handschalthebel durch einen Schaltknauf gekennzeichnet ist, der in verschiedenen Verschiebepositionen entlang des Grundkörpers des Schalthebels fixierbar ist, so dass in einfachster Weise entsprechend dem Geschmack des jeweiligen Nutzers unterschiedliche Schalthebellängen realisierbar sind.

Infolge des Eingriffs des Sicherungsbolzens 24 mit dem Schlitz 23 ist ferner eine unverlierbare Sicherung der Montagehülse 3 auf dem Grundkörper 1 gegeben.

## Patentansprüche

1. Handschalthebel für ein Kraftfahrzeuggetriebe mit einem langgestreckten, an seinem einem Ende einen Schaltknauf tragenden Grundkörper (1), dessen anderes Ende in einem Schalthebelgehäuse gelagert ist, wobei der Schaltknauf in Längsrichtung des Grundkörpers (1) verschiebbar und in der jeweiligen Verschiebeposition fixierbar ist, **gekennzeichnet durch** eine Montagehülse (3), die mit dem Schaltknauf in Verbindung steht und in der der Grundkörper (1) aufgenommen ist, wobei die Montagehülse (3) gegenüber dem Grundkörper (1) verschiebbar und in wählbaren Verschiebepositionen fixierbar ist.

2. Handschalthebel nach Anspruch 1, **dadurch gekennzeichnet, dass** der Schaltknauf in diskreten Positionen fixierbar ist.

3. Handschalthebel nach Anspruch 1, **dadurch gekennzeichnet, dass** der Schaltknauf kontinuierlich verschiebbar und beliebigen Positionen eines vorgebbaren Verschiebeweges fixierbar ist.

4. Handschalthebel nach einem der Ansprüche 1 bis 3, **gekennzeichnet durch** eine, die Montagehülse (3) umgebende und relativ zu dieser verschiebbare Sperrhülse (12), wobei die Sperrhülse (12) zwischen einer die Montagehülse (3) auf dem Grundkörper (1) fixierenden ersten Position und einer, die Fixierung lösenden zweiten Position verschiebbar ist und wobei die Sperrhülse (12) in der ersten Position elastisch gesichert ist.

5. Handschalthebel nach einem der Ansprüche 1 bis 4, **dadurch gekennzeichnet, dass** die Montagehülse (3) mit elastisch in radialer Richtung auslenkbaren Verriegelungszungen (8) versehen ist, die zur Fixierung an dem Grundkörper (1) bestimmt und eingerichtet sind.

6. Handschalthebel nach Anspruch 5, **dadurch gekennzeichnet, dass** die Verriegelungszungen (8) in gleichförmiger Umfangsverteilung an dem einen freien Ende der Montagehülse (3) angeordnet sind und ihrerseits mit Verriegelungshaken (9) ausgerüstet sind, die zum formschlüssigen Zusammenwirken mit Rastnuten (10, 10') des Grundkörpers (1) bestimmt sind.

7. Handschalthebel nach einem der Ansprüche 4 bis 6, **gekennzeichnet durch** eine Sperrfeder (15) zur elastischen Fixierung der Sperrhülse (12) in der genannten ersten Position.

8. Handschalthebel nach einem der Ansprüche 4 bis 7, **dadurch gekennzeichnet, dass** die Sperrhülse (12) einen Betätigungsabschnitt (12') aufweist, der zum manuellen Verschieben derselben entlang der Montagehülse (3) zwischen den genannten Positionen bestimmt und eingerichtet ist.

9. Handschalthebel nach einem der Ansprüche 1 bis 8, **dadurch gekennzeichnet, dass** der Grundkörper (1) unverdrehbar in einer Aufnahmebohrung (21) der Montagehülse (3) angeordnet ist.

10. Handschalthebel nach einem der Ansprüche 1 bis 9, **dadurch gekennzeichnet, dass** die Montagehülse (3) unverlierbar mit dem Grundkörper (1) in Verbindung steht.

11. Handschalthebel nach Anspruch 9 oder 10, **dadurch gekennzeichnet, dass** der Grundkörper (1) mit einem in axialer Richtung langgestreckten Schlitz (23) versehen ist, dass die Länge dieses Schlitzes (23) nach Maßgabe des maximalen Verschiebeweges der Montagehülse (3) auf dem Grundkörper (1) bemessen ist, und dass zur Bildung einer Verdrehsicherung ein, Bohrungen der Montagehülse (3) und den Schlitz (23) durchdringender Sicherungsbolzen (24) vorgesehen ist.

12. Handschalthebel nach Anspruch 11, **dadurch gekennzeichnet, dass** der Schlitz (23) mit Abstand von dem einen, dem Schaltknauf zugekehrten Ende des Grundkörpers (1) angeordnet ist.

## Claims

1. Gear shift lever for a motor vehicle transmission, having an elongate basic body (1) which on its one end supports a gear shift knob and whose other end is mounted in a gear lever housing, wherein the gear shift knob can be displaced in the longitudinal direction of the basic body (1) and can be fixed in the respective displacement position, **characterised by** a mounting sleeve (3) which is connected to the gear shift knob and in which the basic body (1) is accommodated, wherein the mounting sleeve (3) can be displaced with respect to the basic body (1) and can be fixed in selectable displacement positions.

2. Gear shift lever as claimed in claim 1, **characterised in that** the gear shift knob can be fixed in discrete positions.

3. Gear shift lever as claimed in claim 1, **characterised in that** the gear shift knob can be displaced continuously and can be fixed in any positions of a predeterminable displacement path.

4. Gear shift lever as claimed in any one of claims 1 to 3, **characterised by** a locking sleeve (12) which surrounds the mounting sleeve (3) and can be displaced relative thereto, wherein the locking sleeve (12) can be displaced between a first position, which fixes the mounting sleeve (3) on the basic body (1), and a second position which releases the fixing arrangement and wherein the locking sleeve (12) is secured in an elastic manner in the first position.

5. Gear shift lever as claimed in any one of claims 1 to 4, **characterised in that** the mounting sleeve (3) is provided with locking tongues (8) which can be deflected elastically in the radial direction and are intended and arranged to be fixed to the basic body (1).

6. Gear shift lever as claimed in claim 5, **characterised in that** the locking tongues (8) are disposed in a uniform circumferential distribution on the one free end of the mounting sleeve (3) and for their part are equipped with locking hooks (9) which are intended to cooperate in a positive-locking manner with latching grooves (10, 10') of the basic body (1).

7. Gear shift lever as claimed in any one of claims 4 to 6, **characterised by** a catch spring (15) for fixing the locking sleeve (12) in an elastic manner in the said first position.

8. Gear shift lever as claimed in any one of claims 4 to 7, **characterised in that** the locking sleeve (12) comprises an actuating portion (12') which is intended and arranged for manual displacement thereof along the mounting sleeve (3) between the said positions.

9. Gear shift lever as claimed in any one of claims 1 to 8, **characterised in that** the basic body (1) is disposed in a non-rotatable manner in a receiving bore (21) of the mounting sleeve (3).

10. Gear shift lever as claimed in any one of claims 1 to 9, **characterised in that** the mounting sleeve (3) is connected in a captive manner to the basic body (1).

11. Gear shift lever as claimed in claim 9 or 10, **characterised in that** the basic body (1) is provided with a slot (23) which is elongate in the axial direction, the length of this slot (23) is dimensioned according to the maximum displacement path of the mounting sleeve (3) on the basic body (1) and in order to form a lock against rotation a fastening bolt (24) is provided which passes through bores of the mounting sleeve (3) and through the slot (23).

12. Gear shift lever as claimed in claim 11, **characterised in that** the slot (23) is disposed at a spaced interval from the one end of the basic body (1) facing towards the gear shift knob.

## Revendications

1. Levier de changement de vitesse pour une boîte de vitesses de véhicule automobile, comprenant un corps principal (1) de forme allongée, portant un pommeau de commande à sa première extrémité et dont l'autre extrémité est articulée dans un boîtier de levier de changement de vitesse, le pommeau de commande pouvant être déplacé dans la direction longitudinale du corps principal (1) et être immobilisé dans la position de translation atteinte, **caractérisé par** un manchon de montage (3) qui est en liaison avec le pommeau de commande et dans lequel le corps principal (1) est logé, le manchon de montage (3) pouvant être déplacé en translation par rapport au corps principal (1) et être immobilisé dans des positions de translation sélectionnables.

2. Levier de changement de vitesse selon la revendication 1, **caractérisé en ce que** le pommeau de commande peut être immobilisé dans des positions discrètes.

3. Levier de changement de vitesse selon la revendication 1, **caractérisé en ce que** le pommeau de commande peut être déplacé en translation de façon continue et être immobilisé dans n'importe quelle position d'une course de translation pouvant être prédéterminée.

4. Levier de changement de vitesse selon une des revendications 1 à 3, **caractérisé par** un manchon de blocage (12) qui entoure le manchon de montage (3) et qui peut être déplacé en translation par rapport à celui-ci, le manchon de blocage (12) pouvant être déplacé en translation entre une première position, qui immobilise le manchon de montage (3) sur le corps principal (1), et une seconde position qui libère l'immobilisation, et le manchon de blocage (12) étant arrêté élastiquement dans la première position.

5. Levier de changement de vitesse selon une des revendications 1 à 4, **caractérisé en ce que** le manchon de montage (3) est muni de languettes de verrouillage (8) qui peuvent être écartées élastiquement dans une direction radiale, et qui sont prévues et agencées pour l'immobilisation sur le corps principal (1).

6. Levier de changement de vitesse selon la revendication 5, **caractérisé en ce que** les languettes de verrouillage (8) sont disposées selon une distribution périphérique uniforme sur la première extrémité libre du manchon de montage (3) et sont de leur côté équipées de crochets de verrouillage (9) qui sont prévus pour coopérer par complémentarité de forme avec des rainures d'encliquetage (10, 10') du corps principal (1).

7. Levier de changement de vitesse selon une des revendications 4 à 6, **caractérisé par** un ressort de blocage (15) servant pour l'immobilisation élastique du manchon de blocage (12) dans la première position citée.

8. Levier de changement de vitesse selon une des revendications 4 à 7, **caractérisé en ce que** le manchon de blocage (12) présente un segment d'actionnement (12') qui est prévu et agencé pour déplacer manuellement ce manchon le long du manchon de montage (3) entre les positions citées.

9. Levier de changement de vitesse selon une des revendications 1 à 8, **caractérisé en ce que** le corps principal (1) est agencé de façon arrêtée en torsion dans un perçage de réception (21) du manchon de montage (3).

10. Levier de changement de vitesse selon une des revendications 1 à 9, **caractérisé en ce que** le manchon de montage (3) est relié au corps principal (1) de façon imperdable.

11. Levier de changement de vitesse selon la revendication 9 ou 10, **caractérisé en ce que** le corps principal (1) est munie d'une fente (23) allongée dans la direction axiale, **en ce que** la longueur de cette fente (23) est calculée d'après la course de translation maximale du manchon de montage (3) sur le corps principal (1) et **en ce que**, pour former un arrêt anti-torsion, il est prévu une goupille d'arrêt (24) qui traverse des perçages du manchon de montage (3) ainsi que la fente (23).

12. Levier de changement de vitesse selon la revendication 11, **caractérisé en ce que** la fente (23) est disposée à distance de l'extrémité du corps principal (1) qui est dirigée vers le pommeau de commande.
